# EUROPEAN PATENT APPLICATION

(11) **EP 4 156 004 A1**
(43) Date of publication of application: **29.03.2023**
(21) Application number: 21924918.2
(22) Date of filing: 18.02.2021
(51) Int. Cl.: G06F 21/60, G06F 16/176

(54) **DATA PROTECTION SYSTEM**

(30) Priority: 05.02.2021 KR 20210016570
(71) Applicant: NAMUSOFT CO., LTD, Seoul 08589 (KR)
(72) Inventor: WOO, Jong Hyun, Seoul 07365 (KR); HONG, Min Eui, Seoul 07446 (KR); KIM, Hyo Dong, Paju-si Gyeonggi-do 10871 (KR); HWANG, In Wook, Siheung-si Gyeonggi-do 15017 (KR); CHOI, Yu Seon, Gwangju-si Gyeonggi-do 12766 (KR); YANG, Young Mo, Seoul 03420 (KR); LEE, Sung Jin, Incheon 21016 (KR); KIM, Si Nae, Seoul 03335 (KR); LEE, Ha Eun, Uijeongbu-si Gyeonggi-do 11643 (KR); SHIN, Se Yun, Incheon 21040 (KR); KIM, Eung Pyo, Seoul 08541 (KR); SHIN, Young Il, Seoul 08030 (KR); LIM, Yeon Taek, Seoul 08652 (KR)
(74) Representative: Isarpatent
(86) International application number: PCT/KR2021/002051
(87) International publication number: WO 2022/169017

(57) **Abstract**

The data protection system comprises: a data protection storage device; and an agent program disposed on a user terminal or a service server to perform an interlocking operation with the data protection storage device via network, wherein the data protection system determines whether an open request meets an acceptance condition according to prespecified data protection rules when there is the 'open request' from a host device on a file stored in the data protection storage device, and returns a fake file, which is not an original file of the 'open-requested file', to the host device when the 'open request' does not meet the acceptance condition.

## Description

### [Technical Field]

The teachings in accordance with exemplary and non-limiting embodiments of this invention relate generally to a data protection system, and more particularly to a data protection system configured to prevent information leak, loss and breach from data files that do not meet acceptance criteria according to pre-specified data protection rules based on security policy.

### [Background of the Invention]

The traditional data protection for data protection has been realized by utilizing software vaccines in an endpoint device (e.g., user PC, etc.) or realized by a firewall at a network stage, which has resulted in disadvantages that require a large computing power and that have a decreased security accuracy.

As a method unlike the said endpoint protection or network protection, a data protection technology to minimize a computing power consumed for data protection and to enhance a security accuracy by protecting data at a storage that stores the data is referred to as 'storage protection'.

The said storage protection technology may be utilized in various data protections including, but not limited to, protection of data loss (i.e., data loss prevention) caused by malware (an abbreviation of malicious software) such as ransomware, prevention of data from being stolen through phishing, etc. (i.e., data breach prevention) and prevention of data leak by insiders (i.e., data leak prevention).

Therefore, a new storage protection technology is required that enables to improve the security accuracy in the data protection and to minimize a computing power while integrally coping with the data loss, the data breach and the data leak.

### [Summary of Invention]

### [Technical Subject]

The present invention is devised to solve the aforementioned disadvantages and it is an object of the present invention to provide a data protection system configured to prevent information leak, loss and breach from data files that do not meet acceptance (permit) condition according to pre-specified data protection rules based on security policy while being network-connected with a host device (e.g., a user terminal or a service server) but physically including an independent separate data protection storage.

### [Technical Solution]

In one aspect of the present invention, there may be provided a data protection system comprising:
a data protection storage device; and
an agent program disposed on a user terminal or a service server to perform an interlocking operation with the data protection storage device through network, wherein the data protection system may determine whether an 'open request' meets an acceptance condition according to a prespecified data protection rule when there is the 'open request' from a host device on a file stored in the data protection storage device, and may return a fake file, which is not an original source file of the 'open-requested file', to the host device when the 'open request' does not meet the acceptance condition.

### [Advantageous Effects]

The data protection system according to an exemplary embodiment of the present invention has advantageous effects in that information leak, loss and breach can be prevented from data files that do not meet acceptance condition according to the prespecified data protection rules based on security policy while being network-connected with a host device (e.g., a user terminal or a service server) but physically including an independent separate data protection storage.

### [Brief Description of Drawings]

FIG. 1 is a schematic view illustrating a data protection method according to a first exemplary embodiment of the present invention through a data protection system.
FIG. 2 is a schematic view illustrating a data protection method according to a second exemplary embodiment of the present invention through a data protection system.
FIG. 3 is a schematic view illustrating a data protection method according to a third exemplary embodiment of the present invention through a data protection system.
FIG. 4 is a schematic view illustrating a data protection method according to a fourth exemplary embodiment of the present invention through a data protection system.
FIG. 5 illustrates, with reference to FIG. 4, a screen example when a user changes a specific file to 'Open Edit Mode (Edit Mode Open)' or 'Switch Edit Mode (Edit Mode Switch)'after a storage space of data protection storage device is mounted from a window explorer to a network drive.
FIG. 6 is a schematic view illustrating a data protection method according to a fifth exemplary embodiment of the present invention through a data protection system.

### [Detailed Description]

The present invention may be applied with various changes and have several exemplary embodiments, where particular exemplary embodiments will be exemplified in the drawings and described in detail through the detailed description of the present invention.

However, it should be understood that the present invention is not limited to particular embodiments, but encompasses all changes, modifications, equivalents and substitutes included within the ideas and technical scopes of the present invention.

In describing the present invention, detailed descriptions of well-known technologies are omitted for brevity and clarity so as not to obscure the description of the present invention with unnecessary detail. It will be understood that, although the numerical terms (e.g., first, second, etc.) may be used herein to describe various elements, these elements should not be limited by these terms. These terms are simply identification symbols only for use to distinguish one element from another.

Furthermore, it should be interpreted across the entire specification that, although when an element is referred to as being "connected to" or "coupled to" another element, it may be directly connected or coupled to the other element, intervening elements may be present therebetween unless otherwise specially mentioned. Furthermore, it should be further understood across the entire specification that the terms "comprises," "comprising," "including," and "having," are inclusive and therefore specify the presence of other elements, but do not preclude the presence or addition of one or more other elements, unless the context clearly indicates otherwise.

A data protection system according to the present invention may comprise: a data protection storage device; and an agent program disposed on a host device corresponding to a user terminal or a service server to perform an interlocking operation with the data protection storage device via network.

At this time, the data protection system may determine whether an 'open request' meets an acceptance condition according to a prespecified data protection rule when there is the 'open request' from a host device on a file stored in the data protection storage device, and may return a fake file, which is not an original source file of the 'open-requested' file, to the host device when the 'open request' does not meet the acceptance condition.

Here, the fake file refers to a file filled with a null value or a meaningless value in a file body, albeit an original source file of the 'open-requested file' being the same in terms of file capacity.

Hereinafter, a variety of exemplary embodiments of the data protection system according to the present invention will be described in detail with referenced to the accompanying drawings.

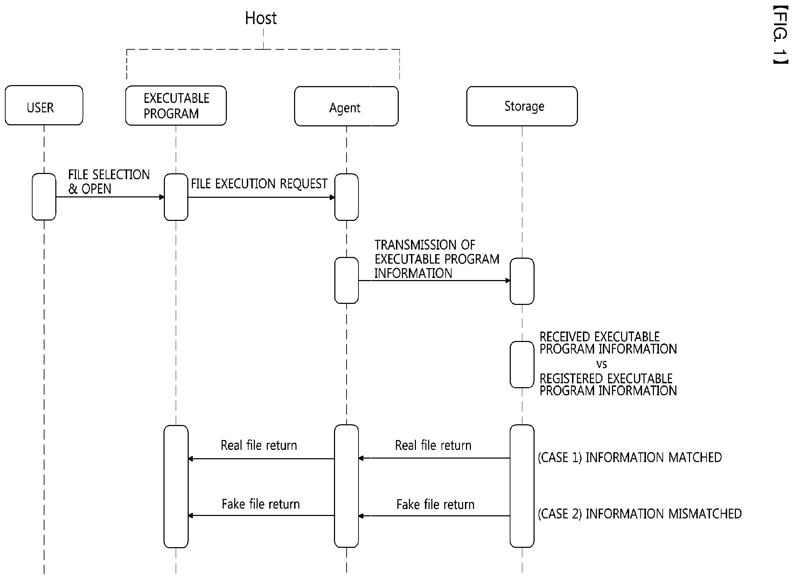

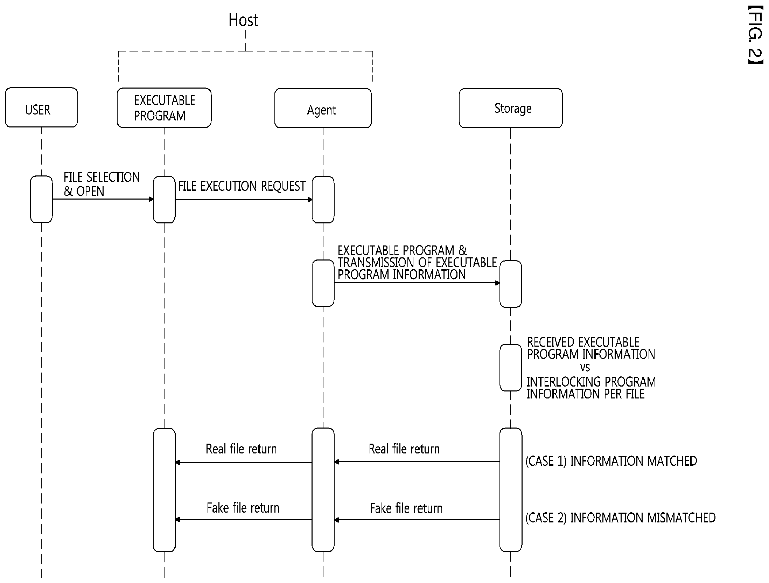

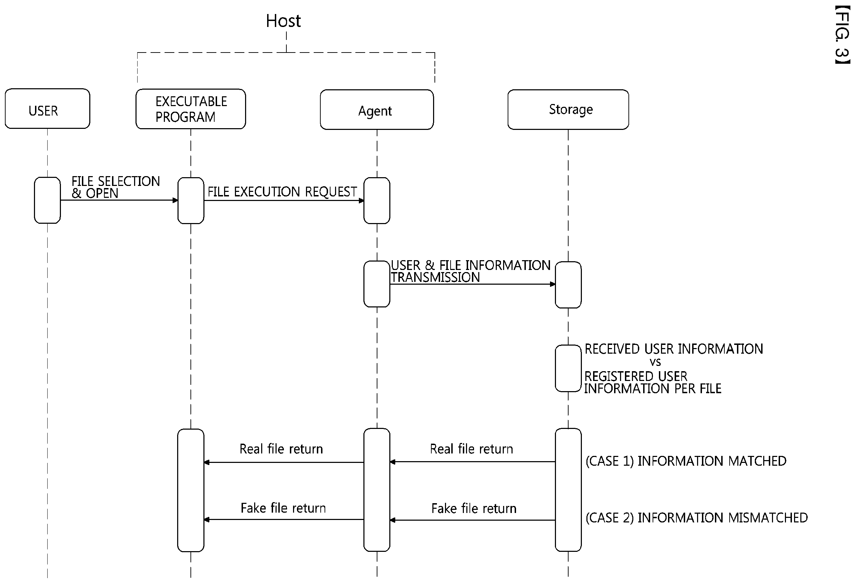

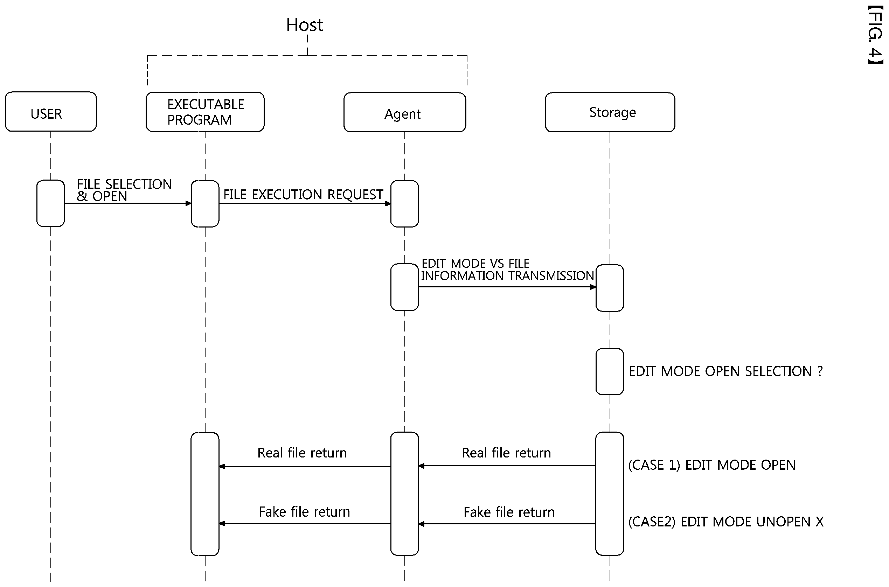

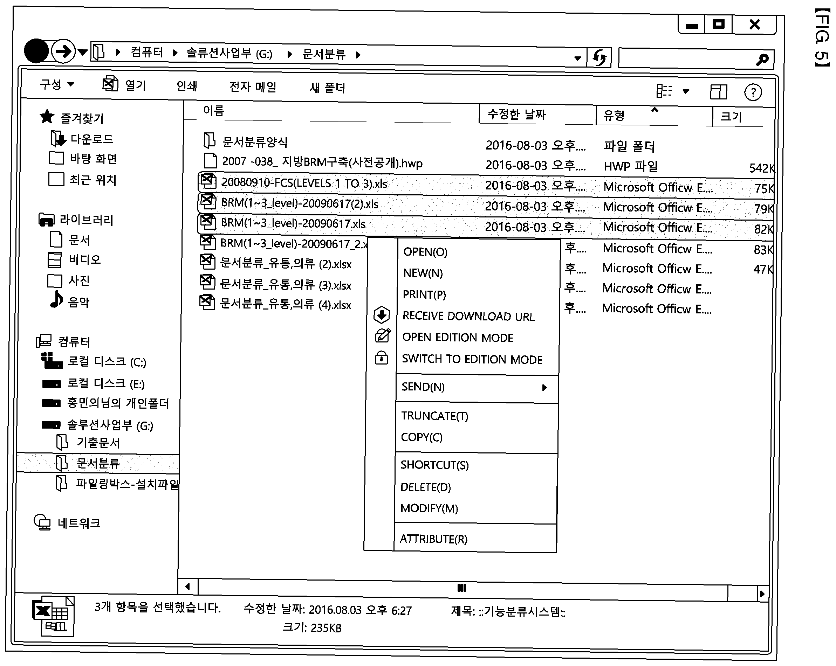

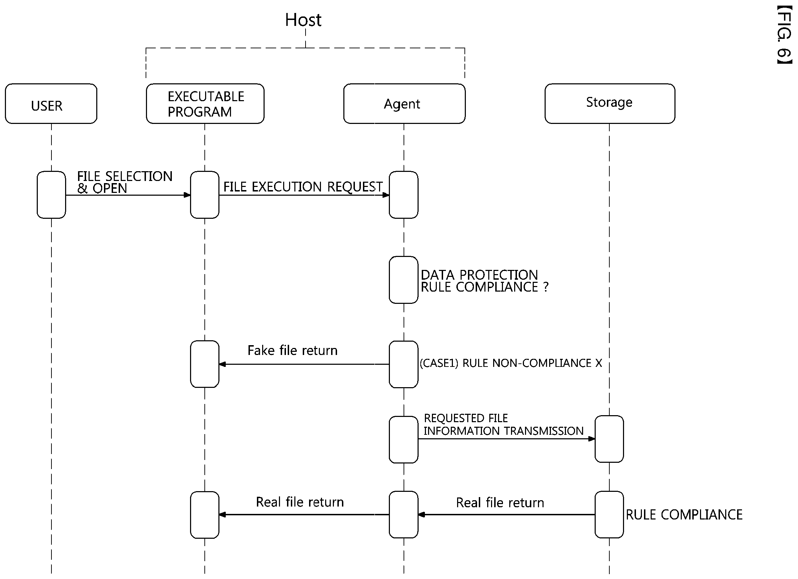

Here, FIG. 1 is a schematic view illustrating a data protection method according to a first exemplary embodiment of the present invention through a data protection system, FIG. 2 is a schematic view illustrating a data protection method according to a second exemplary embodiment of the present invention through a data protection system, FIG. 3 is a schematic view illustrating a data protection method according to a third exemplary embodiment of the present invention through a data protection system, FIG. 4 is a schematic view illustrating a data protection method according to a fourth exemplary embodiment of the present invention through a data protection system, FIG. 5 illustrates, with reference to FIG. 4, a screen example when a user changes a specific file to an 'Open Edit Mode (Edit Mode Open)' or a 'Switch Edit Mode (Edit Mode Switch)'after a storage space of data protection storage device is mounted from a window explorer to a network drive, and FIG. 6 is a schematic view illustrating a data protection method according to a fifth exemplary embodiment of the present invention through a data protection system.

Each exemplary embodiment to be hereinafter described exemplifies a case where data protection rules are respectively and differently applied based on security policy. However, it should be apparent that two or more data protection rules may be simultaneously applied for each exemplary embodiment to be hereinafter described, based on system design method or security policy.

Although it will be clearly understood through explanations to be described hereinafter, the said data protection rules may be set (established) by any one acceptance condition or a group of more than two acceptance conditions among an acceptance condition that allows only a file access by a preregistered executable program (a case of FIG. 1), an acceptance condition that allows only a file access by a preregistered executable program specified for each file (a case of FIG. 2), an acceptance condition that allows only a 'File Open Request' by a legitimate accessible user specified for each file (a case of FIG. 3), and an acceptance condition that allows only the File Open Request based on selection of edit mode (a case of FIG. 4).

At this time, the said setting of the data protection rules may require an additional authentication (e.g., an OTP (One Time Password) authentication, a user identity authentication, such as biometric authentication} through a certifier as to whether a setting-registered user corresponds to a user having a setting authority of the data protection rules.

### [Description of FIG. 1]

The data protection rule in the data protection system according to an exemplary embodiment of FIG. 1 may be applied with an acceptance condition that allows only a file access by a preregistered executable program. The said data protection rule may be registered (stored) with a data protection storage device.

The agent program may be connected to the data protection storage device via network to allow a file archive area of the data protection storage device to be mounted on a host device such as a user PC in a network drive shape (the explanation of which is also the same for the following FIGS. 2-6). The said agent program may be added to a file explorer (Explorer.exe, e.g., window explorer) in a shell-extended menu shape (the explanation of which is also the same for the following FIGS. 2- 6).

Thereafter, when there is an `open(ing) request' of a file stored in data protection storage device from the host device, the agent program may transmit, to the data protection storage device, the information of executable program that accesses to the said 'open-requested file'.
At this time, the data protection storage device or software (hereinafter simply and integrally referred to as 'device') may perform verification on the received information of executable program, and when the request is an 'open request' through a program other than the preregistered executable program, the device may return a fake file, which is not an original file of the 'open-requested file', to the host device, and when the request is an 'open(ing) request' through the preregistered executable program, the device may return the original file of the 'open-requested file' to the host device.

Here, as the information of the preregistered executable program (hereinafter referred to as 'identification information' or 'identification value'), any one information of full path route information on storage location of executable program driven by the relevant host device, binary hash information on relevant executable program, and process ID information of executable program (executable program information) assigned by the relevant agent program-executed host device, a combination of at least two information, or a value or hash value generated by using at least two combinations may be utilized.

For example, when the full path route information or binary hash information are used as the information of executable program (i.e., executable program information), the data protection storage device may perform verification on whether the full path route information or the binary hash information based on the executable program information received from the agent program matches the full path route information or binary hash information based on self-registered designation program, and if matched, the 'open-requested original file' is returned to the host device and if not matched, a fake file, which is not an original file of the 'open-requested file', is returned.

### [Description of FIG. 2]

The data protection rule in the data protection system according to an exemplary embodiment of FIG. 2 may be applied with an acceptance condition that allows only a file access by preregistered executable program specified for each file. The said data protection rule may be registered (stored in) with the data protection storage device.

The agent program may transmit, to the data protection storage device, the 'open-requested file' information and the executable program information that accesses to the 'open-requested file' when there is an 'open(ing) request' from the host device on the file stored in the data protection storage device.

At this time, the data protection storage device may perform the verification on the received executable program information to return, to the host device, the fake file, which is not an original source file of the 'open-requested file', when the request is an 'open request' through a program other than the preregistered executable program specified for each file, and to return, to the host device, the original file of the 'open-requested file' when the request is an 'open request' through the preregistered executable program specified for each file.

Here, as the information of the preregistered executable program (hereinafter referred to as 'identification information' or 'identification value'), any one information of full path route information (route information of full path) on storage location of executable program driven by the relevant host device, binary hash information on relevant executable program, and process ID information of executable program (executable program information) assigned by the relevant agent program-executed host device, a combination of at least two information, or a value or hash value generated by using at least two combinations may be utilized, the explanation of which is the same as that of what was described in FIG. 1.

At this time, the identification information or identification value for identifying a relevant file may also use any one information from the full path route information on storage location of executable program driven by the relevant host device and the binary hash information of relevant file, a combination of two information or a hash value generated by using the said two combinations.

The data protection method according to the abovementioned exemplary embodiment of FIG. 2 may be applied only to an object file that requires data protection (protection object file) (e.g., a prespecified file, a file having a pre-defined string, a file having a personal information pattern, etc.), and may not be applied to a regular file which is not a protection object file. As discussed above, the protection object file may be such that a user selectively designates (sets) a file, or may be automatically designated when an agent program or a data protection storage device includes a prespecified object string by filtering a file body of a relevant file. At this time, the setting (designation) of protection object file may not only set the presence or absence of protection object file but also may divisionally set a low level grade section, an intermediate level grade section and a high level grade section, according to the need.

Furthermore, at this time, in case of a regular file of no protection object file, a fake file may not be returned, but a relevant file may be also provided in a read only mode instead of returning a fake file (that is, 'read' is allowed on a relevant file, but provided in a state of not allowing changes such as write, correction and deletion). The said explanation may be equally applied to the aforementioned exemplary embodiment of FIG. 1 and other exemplary embodiments of the following FIGS. 3 and 4.

### [Description of FIG. 3]

The data protection rule in the data protection system according to an exemplary embodiment of FIG. 3 may be applied with an acceptance condition that allows only a file open request by a legitimate accessible user specified for each file. The said data protection rule may be registered (stored in) with the data protection storage device.

The agent program may transmit, to the data protection storage device, the open-requested file information and the user information of the `file open request' when there is an 'open request' from the host device on the file stored in the data protection storage device.

At this time, the data protection storage device may perform the verification on the received user information to return, to the host device, the fake file, which is not an original source file of the 'open-requested file', when the request is an 'open request' by a user other than a legitimate accessible user specified for each file, and to return, to the host device, the original file of the 'open-requested file' when the request is an 'open request' by the legitimate accessible user specified for each file,

Furthermore, the data protection storage device may additionally set a security level for each user according to the need, just like the aforementioned protection object file grade, compare the security grade level of the received open request object file with a security level of a relevant user, and return a fake file to the host device when the user's security level is lower than the security level of the object file.

### [Description of FIGS. 4 and 5]

The data protection rule in the data protection system according to an exemplary embodiment of FIG. 4 may be applied with an acceptance condition that allows only a `file open(ing)' based on `edit mode selection (selection of edit mode)'.

The edit mode selection may correspond to a data protection processing method with an intent that allows permission of a free file manipulation behavior by a relevant user, if a situation is the one, where a user manipulation (that is, a clear file manipulation behavior by a man, which is not a malware pretending to be a human act or which is not a `file open(ing)' attempt by a machine) clearly distinguishable from a `file open(ing)' attempt by malware, is recognized.

For example, as illustrated in FIG. 5, a user may enable a free manipulation of a relevant file by performing a 'mouse right-clicking act' which is a clear behavior of a human, while placing a cursor on a file to be opened by the user, and by using a method that selects an `edit mode open' from a pop-up menu item that is shown through the 'mouse right-clicking act'.

Toward this end, the agent program may provide, to the host device, selection information (see "edit mode open", "edit mode switch" menu of FIG. 5) where a user can select an 'edit mode open (open edit mode)' on the stored file within the data protection storage device mounted in a network drive shape, and may transmit, to the data protection storage device, the information on the `file open request' based on the edit mode selection. At this time, the data protection storage device may return, to the host device, a fake file, which is not an original of the 'open requested file', when the information is not a `file open request' based on the edit mode selection.

Although the foregoing description has exemplified a case where only a condition is applied that permits a `file open' based on the edit mode selection, data security may be further strengthened by the following processing procedures, albeit being of an edit mode selection, depending on system implementation method.

That is, even if an 'edit mode open(ing)' on a specific file is selected by a user, the data protection storage device may return a fake file, which is not an original source file of prior requested file, when the stored location of relevant file corresponds to the data protection storage device, and when the executable program attempting to access to a relevant file based on the relevant file open request is another executable program, which is not a prior registered security program.

### [Description of FIG. 6]

The data protection rule in the data protection system according to an exemplary embodiment of FIG. 6 may be applied with at least any one rule of the data protection rules in the aforementioned FIGS. 1 ~4 (that is, the acceptance condition that permits only a file access by the preregistered executable program, the acceptance condition that permits only a file access by the preregistered executable program specified for each file, the acceptance condition that permits only a `file open request' by a legitimate accessible user specified for each file, and the acceptance condition that permits only a `file open request' based on edit mode selection). At this time, the data protection rule may be registered with an agent program (stored in a management register).

The agent program in the case of FIG. 6 may determine whether the 'open request' meets the acceptance condition based on the prespecified data protection rule when there is an 'open request' on the file stored in the data protection storage device from the host device, and may return, to the host device, a fake file, which is not an original source file of the 'open requested file' when the acceptance condition is not met, and may transmit, to the data protection storage device, the information that permits the original source file of the 'open requested file' to be provided to the host device from the data protection storage device, when the acceptance condition is met.

For example, when it is assumed that the data protection rule corresponds to a case applicable by an acceptance condition permitting only a file access by the preregistered executable program specified for each file, the agent program may register in advance an identification value of executable program accessible to a relevant data file value with the data management register, and may transmit an access program identification value that allows providing a real file to the data protection storage device only when an executable program, which accesses whenever an access to a relevant file is implemented, is registered as an access object program of the specified file. If otherwise, a fake file having a same file capacity as that of the original source file of the relevant file may be generated and returned to the host device.

The aforementioned data protection system of each exemplary embodiment according to the present invention is a technology of providing files to a host device that makes it impossible to leak, lose and breach a relevant file after generation of the files, albeit file generation by the host device being free within a network drive, by including a data protection storage device that is network-connected to a host device (e.g., a user terminal or service server) but that is physically and independently separated, where essential data files are not stored in the storage of host device but stored in a data protection storage device (e.g., an independent network file server mounted on an outside of the host device) mounted with storage protection function, whereby the data files within the data protection storage device can be protected.

The aforementioned data protection system of each exemplary embodiment according to the present invention has an advantageous effect in that leak, loss and breach of data files stored in the data protection storage device can be prevented, even if a host device is completely dominated or taken over by hackers or malware (malignant code) and the like, by providing a data file to the host device through application of data protection rules that ascertain whether the data file is a legitimate program accessible to the relevant file or a legitimate user when accessed to the file stored in the data protection storage device having the storage protection function.

While the present invention has been described with reference to the particular illustrative embodiments, it is not to be restricted by the embodiments but only by the appended claims. It should be apparent to those skilled in the art that embodiments can be variably changed or modified without departing from the scope and spirit of the present invention.

## Claims

1. A data protection system, comprising:
a data protection storage device; and
an agent program disposed on a user terminal or a service server to perform an interlocking operation with the data protection storage device through network, wherein the data protection system determines whether an 'open request' meets an acceptance condition according to a prespecified data protection rule when there is the 'open request' from a host device on a file stored in the data protection storage device, and returns a fake file, which is not an original source file of the 'open-requested file', to the host device when the 'open request' does not meet the acceptance condition.

2. The data protection system of claim 1, wherein the data protection rule includes an acceptance condition that permits only a file access by a preregistered executable program, wherein the agent program transmit, to the data protection storage device, the information of executable program accessing to the 'open requested file', and the data protection storage device performs verification on the received information of executable program, and when the request is an 'open request' through a program other than the preregistered executable program, the device returns a fake file, which is not an original source file of the 'open-requested file', to the host device.

3. The data protection system of claim 1, wherein the data protection rule includes an acceptance condition that allows only a file access by preregistered executable program specified for each file, and the agent program transmits, to the data protection storage device, the 'open-requested file' information and the executable program information accessing to the 'open-requested file', and the data protection storage device performs the verification on the received executable program information to return, to the host device, the fake file, which is not an original source file of the 'open-requested file', when the request is an 'open request' through a program other than the preregistered executable program specified for each file.

4. The data protection system of claim 2 or 3, wherein any one information from the full path route information on storage location of executable program driven by the relevant host device, binary hash information of relevant executable program, and process ID information of executable program assigned to the host device where a relevant agent program is executed, a combination of at least two information or a value generated by using the said at least two combinations or a hash value, are used as information of preregistered executable program.

5. The data protection system of claim 1, wherein the data protection rule includes an acceptance condition that allows only a `file open request' by a legitimate accessible user specified for each file, and the agent program transmits the 'open-requested file information' and the user information of the `file open request' to the data protection storage device, and wherein the data protection storage device performs the verification on the received user information to return, to the host device, the fake file, which is not an original source file of the 'open-requested file', when the request is the 'open request' by a user other than a legitimate accessible user specified for each file,

6. The data protection system of claim 5, wherein the data protection storage device compares the security grade level of the received 'open requested file' with a security level of a legitimate accessible user accessible to a relevant file, and returns a fake file to the host device when the security level of relevant user is lower than the security level of the relevant file.

7. The data protection system of claim 1, wherein the data protection rule includes an acceptance condition that allows only a `file open' based on 'edit mode selection (selection of edit mode)', the agent program provides, to the host device, selection information where a user can select an 'edit mode open (open edit mode)' on the stored file within the data protection storage device mounted in a network drive shape, and transmits, to the data protection storage device, the information on the `file open request' based on the 'edit mode selection', and the data protection storage device returns, to the host device, a fake file, which is not an original source file of the 'open requested file', in case of not being of a `file open request' based on the edit mode selection.

8. The data protection system of claim 1, wherein the data protection rule is set by at least any one rule of the acceptance condition that permits only a file access by the preregistered executable program, the acceptance condition that permits only a file access by the preregistered executable program specified for each file, the acceptance condition that permits only a `file open request' based on edit mode selection, and the acceptance condition that permits only a `file open request' by a legitimate accessible user specified for each file, the agent program determines whether the 'open request' meets the acceptance condition based on the prespecified data protection rule, and returns, to the host device, a fake file, which is not an original source file of the 'open requested file' when the acceptance condition is not met, and transmits, to the data protection storage device, the information that permits the original source file of the 'open requested file' to be provided to the host device from the data protection storage device, when the acceptance condition is met.

9. The data protection system of claim 1, wherein the fake is filled with a null value or a meaningless value in a file body, albeit an original source file of file requested to be opened being the same in terms of file capacity.

10. The data protection system of claim 1, wherein the data protection rule is set by at least any one rule of the acceptance condition that permits only a file access by the preregistered executable program, the acceptance condition that permits only a file access by the preregistered executable program specified for each file, the acceptance condition that permits only a `file open request' based on edit mode selection, and the acceptance condition that permits only a `file open request' by a legitimate accessible user specified for each file, and the setting of the data protection rule requires an additional verification using an authenticator on whether a setting-registered user corresponds to a user having a setting authority of the data protection rule.
